# EUROPEAN PATENT SPECIFICATION

(11) **EP 2 541 666 B1**
(45) Date of publication and mention of the grant of the patent: **20.08.2014**
(21) Application number: 11172425.8
(22) Date of filing: 01.07.2011
(51) Int. Cl.: H01M 10/42, A62C 3/16, A62C 99/00, B60L 3/00, B60L 11/14, B60L 11/18

(54) **A battery safety arrangement for a motor vehicle**
Batteriesicherheitsanordnung für ein Kraftfahrzeug
Agencement de sécurité de batterie pour véhicule à moteur

(43) Date of publication of application: 02.01.2013
(73) Proprietor: Autoliv Development AB, 447 83 Vårgårda (SE)
(72) Inventor: Sturk, David, 11642 Stockholm (SE)
(74) Representative: Parry, Simon James

(56) References cited:
- EP-A1- 2 189 187
- EP-A1- 2 216 843
- WO-A1-2010/025761
- US-A- 5 523 178

## Description

The present invention relates to a battery safety arrangement for a motor vehicle, and more particularly relates to an arrangement operable to extinguish a battery fire.

Most motor vehicles conventionally comprise an internal combustion engine to provide propulsive power, in combination with an electric battery for the purpose of starting the engine, and also to provide electrical power for auxiliary functions whilst the engine is not running.

In view of increasing concerns over the environmental impact of motor vehicles powered by internal combustion engines, there is now increased interest and importance in providing so called "cleaner" motor vehicles which produce less pollution in the form of gases which are deemed harmful to the environment. Accordingly, it is now becoming more and more common to provide motor vehicles which are powered electrically, at least during periods of their operation. For example, it has been proposed to provide electric vehicles which are driven by a large electrical motor drawing its power from a rechargeable battery.

It has also been proposed to provide so-called "hybrid" motor vehicles which typically combine a very fuel-efficient and "clean" internal combustion engine with an electric motor. Hybrid vehicles of this type are configured to be driven by the electric motor whenever possible or convenient, but are driven by the internal combustion engine when the propulsive power offered by the motor is insufficient to meet the instant performance demand, for example because the demand simply exceeds the performance limits of the motor, or because the source of electrical energy from which the motor draws its power contains insufficient charge. In such an arrangement, the motor typically draws its electric power from a large capacity rechargeable battery arranged to charge from an alternator connected to the engine when the combustion engine is running. However, it has also been proposed to provide electric-drive arrangements in which the motor draws its electric power from a series of high-capacity capacitors rather than from an electrochemical battery as such. The term "battery" as used in this patent specification is therefore intended to refer to any electrical energy storage device including, but not limited to, an electrochemical battery, a capacitor, a super-capacitor etc.

As will be appreciated, electrically powered vehicles, and so-called hybrid vehicles of the general type described above therefore require relatively large batteries, in order to provide sufficient electrical power for the propulsive motor. Accordingly, such batteries are typically configured to be very high voltage (typically approximately 300V) and to store a very significant amount of electrical energy (typically between 2 - 10 kWh), and as such represent a significant electrical hazard, particularly in the event of the vehicle being involved in a crash, or an internal short-circuit occurring within the battery. Additionally, batteries of a type suitable for use in electric or hybrid vehicles presently contribute very significantly to the overall cost of the vehicle. For example, it is not uncommon for the battery unit of such a vehicle to account for 10-30% of the total cost of the vehicle. It is therefore desirable to protect the battery unit from damage in the event that the vehicle is involved in an accident, thereby facilitating less-expensive repair of the vehicle.

As will be appreciated, batteries of the type described above can become extremely hot in the event of a short-circuit occurring either internally, or externally as a result of a crash, and hence represent a risk of fire or explosion in such circumstances.

A battery fire or explosion in a motor vehicle, particularly in a so-called hybrid or electric vehicle having large batteries, can be very dangerous and can occur in various circumstances, such as; in the event of a mechanical intrusion into the battery pack; or thermally or electrically induced pressure build up inside a battery cell, which can cause the protective outer housing of the battery to rupture. The gases emitted from such a leakage can produce a flammable mixture upon contact with oxidising agents such as the oxygen in the surrounding air. If such a mixture evolves in an environment where a source of ignition or significant heat is present, fire or an explosion can result.

As a result of these risks, systems and arrangements have been proposed to extinguish vehicle fires automatically. However, most prior art systems of this type are large in size and thus only lend themselves to convenient installation on very large industrial or commercial vehicles. Additionally, most such systems do not focus their extinguishing power on the internal structure of the vehicle's battery.

It is an object of the present invention, to provide an improved battery safety arrangement for a motor vehicle, which is operable to extinguish a battery fire

According to a first aspect of the present invention, there is provided a battery safety arrangement for a motor vehicle, the arrangement being operable to extinguish a battery fire and comprising: a battery unit having a housing defining an interior volume containing at least one electric cell and a separate internal pressure vessel, the pressure vessel being exposed to the internal temperature of the interior volume and containing a volume of compressed extinguishing medium at a pressure which is dependant on said internal temperature, the pressure vessel being initially closed by a closure arrangement configured to open in response to an increase in said pressure corresponding to an increase in said internal temperature above a threshold temperature value to thereby release said extinguishing medium from said pressure vessel for flow into said interior volume of the housing.

Preferably, the closure arrangement comprises a closure member initially sealing an outlet aperture of the pressure vessel, the closure member being configured to rupture upon said increase in pressure.

Advantageously, the arrangement comprises a plurality of said internal pressure vessels located within the interior volume of the housing.

Conveniently, said internal pressure vessels are spaced apart from one another.

Preferably, said extinguishing medium comprises carbon dioxide.

Advantageously, said extinguishing medium comprises a Halon replacement.

Conveniently, said extinguishing medium represents a first of two extinguishing mediums, the second of which is provided within an initially closed additional pressure vessel arranged in fluid communication with the interior volume of the housing, wherein the first extinguishing medium and the or each said internal pressure vessel form at least part of an actuating system configured such that upon an increase in said internal temperature above a threshold temperature value, the resulting pressure of the first extinguishing medium acts to open the additional pressure vessel, thereby releasing a flow of said second extinguishing medium to the interior volume of the housing.

Preferably, said additional pressure vessel containing the second extinguishing medium is an external pressure vessel positioned outside the interior volume of the housing, the additional pressure vessel being connected to the interior volume of the housing via a flow conduit. Advantageously, the or each said internal pressure vessel containing the first extinguishing medium is fluidly connected to the external pressure vessel via a flow passage.

Conveniently, the or each internal pressure vessel is configured to release a flow of said first extinguishing medium along said flow passage upon an increase in said internal temperature above said threshold temperature value, said flow of the first extinguishing medium acting to increase the pressure within the external pressure vessel.

Preferably, said additional pressure vessel is initially closed by a closure arrangement configured to open upon an increase in its internal pressure above a threshold pressure value.

Advantageously, opening of said closure member is effective to permit a mixed flow of both said extinguishing mediums from said additional pressure vessel to the interior volume of the housing.

Conveniently, said closure arrangement comprises a closure member initially sealing an outlet aperture of the additional pressure vessel, the closure member being configured to rupture upon said increase in the internal pressure of the additional pressure vessel above the threshold value.

Preferably, said second extinguishing medium comprises a Halon replacement such as, for example, Novec 1230 ™, Halotron 1 ™, or Halotron 2 ™.

Advantageously, the or each internal pressure chamber is configured to have a similar size and shape to the or each electric cell.

According to another aspect of the present invention, there is provided a battery safety arrangement for a motor vehicle, the arrangement being operable to extinguish a battery fire and comprising: a battery unit having a housing defining an interior volume and containing at least one electric cell; an initially closed pressure vessel arranged in fluid communication with the interior volume of the housing and containing a volume of compressed extinguishing medium; and an actuating system operable to open the pressure vessel to provide a flow of said extinguishing medium to the interior volume of the housing; the arrangement being characterised in that said actuating system comprises a volume of compressed trigger gas provided within the housing at a pressure which is dependant on the internal temperature within the housing, the actuating system being configured such that upon an increase in said internal temperature above a threshold temperature value, the resulting pressure of the trigger gas acts to open the pressure vessel thereby releasing said flow of extinguishing medium to the interior volume of the housing. The trigger gas is preferably also an extinguishing medium.

So that the invention may be more readily understood, and so that further features thereof may be appreciated, embodiments of the invention will now be described by way of example with reference to the accompanying drawings in which:
Figure 1 is a schematic cross sectional view through a motor vehicle battery unit incorporating a safety arrangement in accordance with a first embodiment of the present invention;
Figure 2 is a perspective view of an internal pressure vessel provided within the battery unit of figure 1;
Figure 3 is a cross-sectional view through the outlet region of the pressure vessel illustrated in figure 2, showing a closure arrangement in an initial configuration effective to seal the pressure vessel;
Figure 4 is a cross-sectional view similar to that of figure 3, but which shows the closure arrangement in a ruptured, open configuration; and
Figure 5 is a schematic cross sectional view through a motor vehicle battery unit incorporating a safety arrangement in accordance with a second embodiment of the present invention;

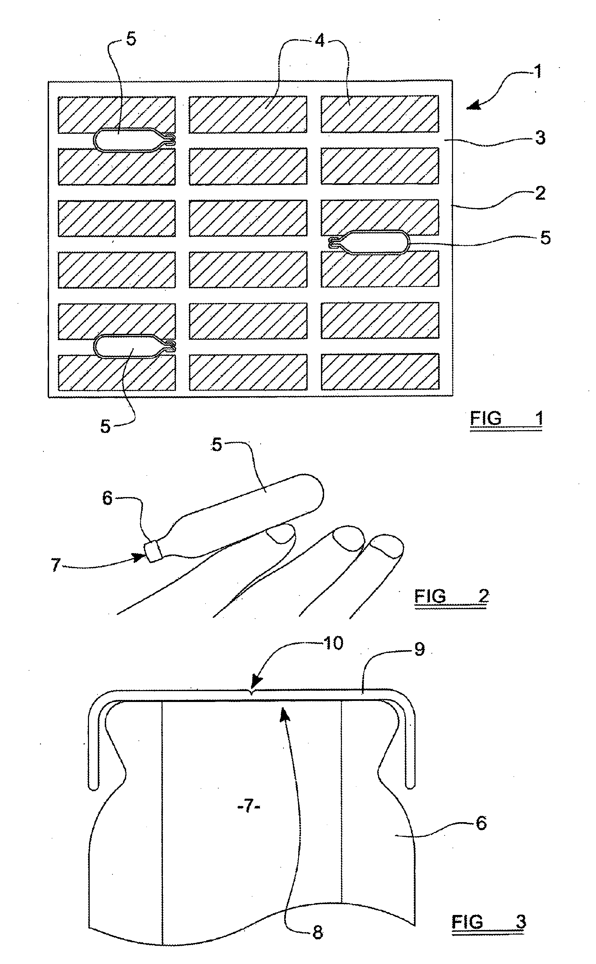

Referring now to the drawings in more detail, figure 1 shows a battery unit 1 comprising a housing 2 defining an interior volume 3 within which a plurality of electrically connected cells 4 are provided in an array. Although not shown in figure 1 for reasons of clarity, the housing is provided with a matrix within which the individual cells 4 are securely mounted. As shown in figure 1, the cells 4 are mounted in spaced relation to one another, and also spaced slightly inwardly from the innermost surface of the housing 2. A space is thus defined between the cells and the housing around which gas is free to flow.

In addition to the cells 4, the battery unit also incorporates a plurality of small pressure vessels 5 which are dotted around the interior volume 3 of the housing in spaced relation to one another. In the particular arrangement illustrated in figure 1, it will be noted that each pressure vessel 5 is positioned between a pair of neighbouring cells 4. It is proposed that each pressure vessel 5 will be configured to have a size and shape which is generally similar to that of the cells 4, so that the pressure vessels may be conveniently received into the cell matrix inside the housing, and thus securely fixed in their respective positions.

An exemplary pressure vessel 5 is illustrated in more detail in figure 2, and is shown next to a person's little finger to give an impression of its possible size. In the preferred arrangement illustrated, the pressure vessel takes the form of a small metal cylinder or cartridge having a diameter of approximately 18mm, which makes it of comparable shape and size to a standard 18650 Li-lon laptop computer battery cell, which are also used in some electric vehicles. Alternatively, the pressure vessel can be formed somewhat larger than this so as to have a comparable shape and size to larger cylinder cells which are commonly used in hybrid or electric motor vehicle batteries.

As shown in figure 2, one end of the pressure vessel 5 is tapered and thus takes the form of a narrowed neck 6, through which an outlet channel 7 is defined, and which terminates with an outlet aperture 8.

Each pressure vessel 5 is filled with a volume of fire extinguishing medium which is preferably provided in the form of a compressed gas, and is initially sealed at its outlet aperture 7. The compressed gas may be liquefied by high pressure, which ensures minimal volume consumption.

Figure 3 shows a preferred type of closure arrangement which is used to seal the outlet aperture of each pressure vessel 5. In particular, it is to be noted that a thin membrane or burst seal 9 is affixed to the open end of the neck 6 so as to extend across and hence seal the outlet aperture. The membrane or burst seal may be made of any convenient material having sufficient resistance to degradation in the environment of the vehicle battery 1, and also sufficient strength and integrity to hold back the pressure of the extinguishing medium inside the vessel 5. For example, it is envisaged that in embodiments of the invention the membrane or burst seal 9 may be formed of metal. A central region of the membrane is provided with a line or point of relative mechanical weakness, such as the exemplary cut or notch 10 illustrated in figure 3.

As will be appreciated, because the pressure vessels 5 are located within the interior volume 3 of the battery housing 2, they are each exposed to the internal temperature of the battery. Thus, if the internal temperature of the battery 1 should increase during use, the compressed extinguishing medium contained within the pressure vessels 5 will also be subjected to a corresponding temperature rise. The closure arrangements provided on each pressure vessel 5 are configured to open automatically in the event that the internal temperature of the battery exceeds a predetermined threshold temperature deemed to represent a risk of or likely fire or imminent explosion inside the battery, to thereby release the contents of the pressure vessels 5 into the interior volume 3 of the battery. This can be achieved by making use of the expansion of the extinguishing medium in each pressure vessel 5 upon such an increase in temperature, noting of course that the pressure within each pressure vessel will increase upon an increase in temperature in accordance with the Gay-Lussac gas law (i.e. if a gas's temperature increases then so will its pressure, if the mass and volume of the gas are held constant).

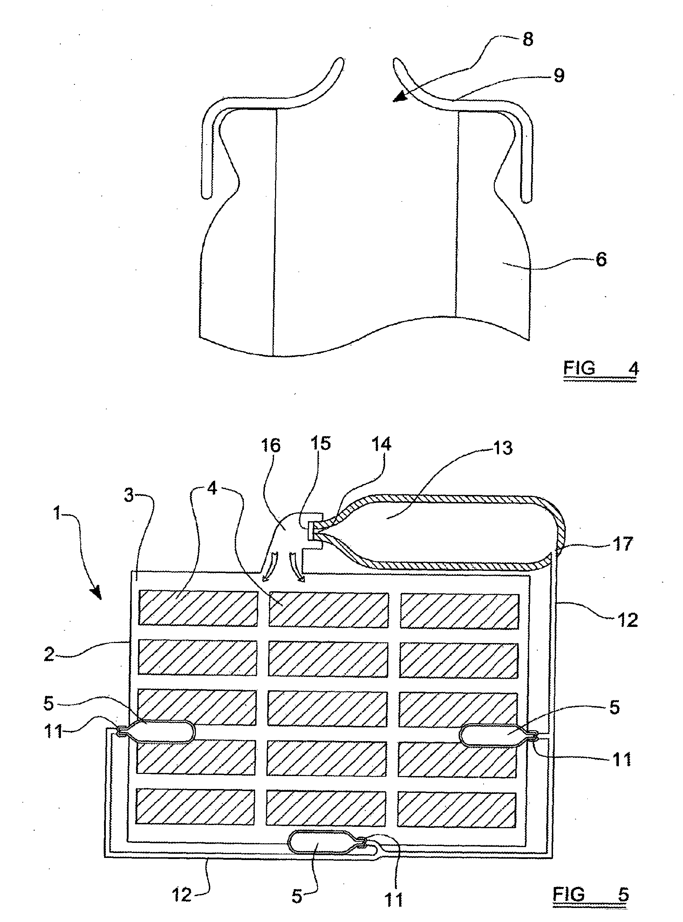

In the case of the specific closure arrangement illustrated in figure 3, it is proposed that the depth of the cut or notch 10 will be carefully selected so that the membrane or burst seal 9 will remain intact and thus resist pressures within the pressure vessel corresponding to temperatures below the threshold temperature, but so that the membrane or burst seal 9 will fail and rupture at the cut or notch 10 in response to the increased pressure arising from a temperature above the threshold temperature. Figure 4 illustrates the membrane or burst seal 9 in a ruptured condition, from which it can be seen that the outlet aperture 8 of the pressure vessel is thus opened to permit the outflow of the extinguishing medium into the interior volume of the battery under pressure.

As will thus be appreciated, the above-described arrangement thus provides a passive and automatic system which serves to flood the interior volume 3 of the battery 1 with high pressure extinguishing gas in the event that the internal temperature of the battery rises to a threshold value deemed dangerous. The extinguishing gas will thus act to extinguish any fire that may have started inside the battery.

Because the pressure vessels 5 containing the extinguishing gas are provided inside the battery housing 2, a very compact extinguishing system is thus provided, which does not require extensive equipment external of the battery. Furthermore, because the system is configured to be actuated by the increase in pressure of the extinguishing medium as a direct result of any increase in the internal temperature of the battery, the system effectively draws the energy required for actuation from the fire (or merely a large increase in temperature) within the battery itself, thereby rendering superfluous any additional actuating equipment such as electronic sensors, actuators or pyrotechnic charges which are commonly used in prior art automatic extinguishing systems.

As will be appreciated, the type of extinguishing medium which is used can have a significant effect on the performance of the safety arrangement. Various substances can be used as the basis for a suitable extinguishing medium, with typical candidates including pure carbon dioxide, water mist, aerosolic carbonates, and so-called "Halon-replacement" substances.

Carbon dioxide is considered to be particularly suitable for use as the extinguishing medium, or at least a constituent thereof, on account of its relatively high expansion ratio when subjected to a rise in temperature. Carbon Dioxide is subject to a relatively high rise in pressure for a unit rise in temperature, and this expansion ratio can be further regulated and controlled by adjusting the concentration of carbon dioxide in an extinguishing gas. For example, Carbon Dioxide at a volumetric concentration of 75% and a pressure of approximately 50 bar at 15°C will increase in pressure by more than five times (to approximately 260 bar) upon a rise in temperature to 70°C. This characteristic makes Carbon Dioxide suitable for mixture with another extinguishing medium in order to improve its thermal pressure increase upon heating.

So called "Halon replacement" substances have the benefit of being capable of consuming available oxygen by endothermic chemical reactions and have long been used for extinguishing fires where there is a risk of electronic components being short circuited. Two examples of such Halon replacements which could be used for the extinguishing medium of the present invention are Halotron ™ and Novec 1230 ™. Moreover, there are two available versions of Halotron ™ , namely Halotron 1™ and Halotron 2™. Both Halotron 1™ and Novec 1230™ are liquefied when compressed to a pressure of 7 bar, whilst Halotron 2™ requires a higher compression to be liquefied. By mixing carbon dioxide with the liquefied Halotron ™, an extinguishing medium will be obtained which increases in pressure more rapidly in response to an increase in temperature, which makes it particularly suitable for use in the present invention on account of the improved spread of the extinguishing medium throughout the interior volume 3 of the housing upon actuation of the safety arrangement.

Aerosolic carbonates could also be used as a component of the extinguishing medium, as carbonates can have a neutralising effect on the potentially toxic flue gases which can arise from a burning Li-ion battery cell.

Alternatively, a Halon replacement could be supplemented with additives to enhance and moderate its capabilities so as not only to act as an extinguishing medium, but also to be capable of neutralising potential toxic gases. Besides carbonates, dimethyl acetamide (DMAc) may have an impeding effect on the decomposition of a battery cell's electrolyte and in particular the generation of hydrogen fluoride.

Figure 5 illustrates a safety arrangement in accordance with another embodiment of the invention, with identical or similar parts and components identified with the same reference numbers as used in figures 1 to 4. In this arrangement, the battery 1 is again provided with a plurality of internal pressure vessels 5, each of which is initially closed in a similar manner to the previously described embodiment, and each of which is charged with a volume of a first compressed extinguishing medium. The first extinguishing medium is preferably carbon dioxide. The internal pressure vessels 5 are again spaced from one another and may be mounted in the spaces between cells 4. The pressure vessels 5, and their extinguishing medium, are thus exposed to the internal temperature of the battery 1 in the same manner to the previously described embodiment of figures 1 to 4.

However, it will be noted that in the arrangement of figure 5, the pressure vessels 5 are located adjacent the housing 2 and are fluidly connected at their (initially sealed) outlet apertures 8 to respective flow ports 11 of a flow conduit network 12 outside the housing 2.

Furthermore, the arrangement of figure 5 comprises an external pressure vessel 13 which is mounted outside the housing 2. The external pressure vessel 13 may be of generally similar form the internal pressure vessels 5, but is relatively large in comparison to the internal ones. The external pressure vessel 13 is filled with a second compressed extinguishing medium, preferably comprising a Halon replacement of the types mentioned above, and is initially closed by a closure arrangement which may be similar to those used to close the internal pressure vessels 5. Accordingly, the external pressure vessel has an outlet aperture 14 which is initially sealed by a membrane or burst seal 15 of similar configuration and function to those of the smaller internal pressure vessels 5. Additionally, the (initially sealed) outlet aperture 14 of the external pressure vessel is fluidly connected to a flow conduit 16 which opens into the interior volume 3 of the battery housing 2. The external pressure vessel 13 is thus arranged in fluid communication with the interior volume 3.

The external pressure vessel 13 is additionally provided with an inlet port 17 which is fluidly connected to the flow conduit network 12.

In the event of a fire inside the battery 1, the internal temperature of the battery will of course increase, thereby also increasing the temperature of the first extinguishing medium within the internal pressure vessels 5. This increase in temperature of the first extinguishing medium causes a rapid increase in pressure within each internal pressure vessel 5. In the same manner to the embodiment of figures 1 to 4, the membranes or burst seals 9 of the inner pressure vessels 5 are configured to rupture under the increased pressure arising from an internal temperature inside the housing 2 above the threshold temperature value, thereby opening the outlet aperture 8 of each internal pressure vessel 5. When the outlet apertures 8 are opened in this manner, the first extinguishing medium is released into the flow conduit network 12 and thus flows under pressure into the external pressure vessel 13 via the inlet port 17. This flow of the first extinguishing medium into the external pressure vessel 13 is thus effective to increase the internal pressure of the external pressure vessel 13. The closure membrane or burst seal 15 over the outlet 14 of the external pressure vessel 13 is configured to rupture and thus open (in a similar manner to those of the internal pressure vessels 5) upon an increase in the internal pressure within the external pressure vessel above a threshold pressure value, thereby releasing the contents (now a mixture of the first and second extinguishing mediums) into to the internal volume 3 of the battery housing via the flow conduit 16.

As will thus be appreciated, the embodiment illustrated in figure 5 thus operates in a similar manner to the previous embodiment of figures 1 to 4 in the sense that the system is configured to be actuated by the increase in pressure of the first extinguishing medium as a direct result of any increase in the internal temperature of the battery. The system thus again effectively draws the energy required for actuation from the fire (or merely a large increase in temperature) within the battery itself, thereby rendering superfluous any additional actuating equipment such as electronic sensors, actuators or pyrotechnic charges which are commonly used in prior art automatic extinguishing systems.

It is to be noted that in the embodiment of figure 5, the first extinguishing medium initially held within the internal pressure vessels 5 can be considered to represent a trigger gas which, as part of an actuating system, acts to open the external pressure vessel 14 in response to an increase in internal temperature within the battery housing 2.

It is to be appreciated that although the invention has been described above with specific reference to particular embodiments, various modifications or alterations could be made without departing from the scope of the invention.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A battery safety arrangement for a motor vehicle, the arrangement being operable to extinguish a battery fire and comprising: a battery unit (1) having a housing (2) defining an interior volume (3) containing at least one electric cell (4) and a separate internal pressure vessel (5), the pressure vessel (5) being exposed to the internal temperature of the interior volume (3) and containing a volume of compressed extinguishing medium at a pressure which is dependant on said to internal temperature, the pressure vessel (5) being initially closed by a closure arrangement (9) configured to open in response to an increase in said pressure corresponding to an increase in said internal temperature above a threshold temperature value to thereby release said extinguishing medium from said pressure vessel (5) for flow into said interior volume (3) of the housing (2).

2. A battery safety arrangement according to claim 1, wherein said closure arrangement comprises a closure member (9) initially sealing an outlet aperture(8) of the pressure vessel (5), the closure member (9) being configured(10) to rupture upon said increase in pressure.

3. A battery safety arrangement according to claim 1 or claim 2, comprising a plurality of said internal pressure vessels (5) located within the interior volume (3) of the housing (2).

4. A battery safety arrangement according to claim 3, wherein said internal pressure vessels (5) are spaced apart from one another.

5. A battery safety arrangement according to any preceding claim, wherein said extinguishing medium comprises carbon dioxide.

6. A battery safety arrangement according to any preceding claim, wherein said extinguishing medium comprises a Halon replacement.

7. A battery safety arrangement according to any preceding claim, wherein said extinguishing medium represents a first of two extinguishing mediums, the second of which is provided within an initially closed additional pressure vessel (13) arranged in fluid communication with the interior volume (3) of the housing (2), wherein the first extinguishing medium and the or each said internal pressure vessel (5) form at least part of an actuating system configured such that upon an increase in said internal temperature above a threshold temperature value, the resulting pressure of the first extinguishing medium acts to open the additional pressure vessel (13), thereby releasing a flow of said second extinguishing medium to the interior volume (3) of the housing (2).

8. A battery safety arrangement according to claim 4, wherein said additional pressure vessel containing the second extinguishing medium is an external pressure vessel (13) positioned outside the interior volume (3) of the housing (2), the additional pressure vessel (13) being connected to the interior volume (3) of the housing (2) via a flow conduit (16).

9. A battery safety arrangement according to claim 5 as dependant upon claim 2 or claim 3, wherein the or each said internal pressure vessel (5) containing the first extinguishing medium is fluidly connected to the external pressure vessel (13) via a flow passage (12).

10. A battery safety arrangement according to claim 6, wherein the or each internal pressure vessel (5) is configured to release a flow of said first extinguishing medium along said flow passage (12) upon an increase in said internal temperature above said threshold temperature value, said flow of the first extinguishing medium acting to increase the pressure within the external pressure vessel (13).

11. A battery safety arrangement according to claim 7, wherein said additional pressure vessel (13) is initially closed by a closure arrangement (15) configured to open upon an increase in its internal pressure above a threshold pressure value.

12. A battery safety arrangement according to claim 8, wherein opening of said closure member (15) is effective to permit a mixed flow of both said extinguishing mediums from said additional pressure vessel (13) to the interior volume (3) of the housing (2).

13. A battery safety arrangement according to claim 11 or claim 12, wherein said closure arrangement comprises a closure member (15) initially sealing an outlet aperture (14) of the additional pressure vessel (13), the closure member (15) being configured to rupture upon said increase in the internal pressure of the additional pressure vessel (13) above the threshold value.

14. A battery safety arrangement according to any one of claims 7 to 13, wherein said second extinguishing medium comprises a Halon replacement.

15. A battery safety arrangement according to any preceding claim, wherein the or each internal pressure vessel (5) is configured to have a similar size and shape to the or each electric cell (4).

## Patentansprüche

1. Batteriesicherheitsanordnung für ein Kraftfahrzeug, wobei die Anordnung so einsetzbar ist, dass sie einen Batteriebrand löscht und Folgendes umfasst: eine Batterieeinheit (1) mit einem Gehäuse (2), das ein Innenvolumen (3) definiert, das mindestens eine galvanische Zelle (4) und einen separaten inneren Druckbehälter (5) enthält, wobei der Druckbehälter (5) der Innentemperatur des Innenvolumens (3) ausgesetzt ist und ein Volumen eines komprimierten Löschmittels bei einem Druck enthält, der von der Innentemperatur abhängt, wobei der Druckbehälter (5) anfangs mit einer Verschlussanordnung (9) verschlossen ist, die so eingerichtet ist, dass sie sich als Reaktion auf eine Erhöhung des Drucks öffnet, die einer Erhöhung der Innentemperatur über einem Temperatur-Schwellenwert entspricht, um dadurch das Löschmittel aus dem Druckbehälter (5) freizusetzen, um in das Innenvolumen (3) des Gehäuses (2) zu strömen.

2. Batteriesicherheitsanordnung nach Anspruch 1, wobei die Verschlussanordnung ein Verschlusselement (9) umfasst, das anfangs eine Austrittsöffnung (8) des Druckbehälters (5) abdichtet, wobei das Verschlusselement (9) so eingerichtet ist (10), dass es bei der Druckerhöhung reißt.

3. Batteriesicherheitsanordnung nach Anspruch 1 oder Anspruch 2, die eine Vielzahl der inneren Druckbehälter (5) umfasst, die sich in dem Innenvolumen (3) des Gehäuses (2) befinden.

4. Batteriesicherheitsanordnung nach Anspruch 3, wobei die inneren Druckbehälter (5) voneinander beabstandet sind.

5. Batteriesicherheitsanordnung nach einem vorhergehenden Anspruch, wobei das Löschmittel Kohlendioxid enthält.

6. Batteriesicherheitsanordnung nach einem vorhergehenden Anspruch, wobei das Löschmittel einen Halon-Ersatz enthält.

7. Batteriesicherheitsanordnung nach einem vorhergehenden Anspruch, wobei das Löschmittel ein erstes von zwei Löschmitteln darstellt, wobei das zweite davon in einem anfangs geschlossenen zusätzlichen Druckbehälter (13) vorgesehen ist, der in Fluidverbindung mit dem Innenvolumen (3) des Gehäuses (2) angeordnet ist, wobei das erste Löschmittel und der oder jeder innere Druckbehälter (5) zumindest einen Teil eines Auslösesystems bilden, das so eingerichtet ist, dass bei einer Erhöhung der Innentemperatur über einen Temperatur-Schwellenwert der entstehende Druck des ersten Löschmittels so wirkt, dass er den zusätzlichen Druckbehälter (13) öffnet, wodurch ein Strom des zweiten Löschmittels ins Innenvolumen (3) des Gehäuses (2) freigesetzt wird.

8. Batteriesicherheitsanordnung nach Anspruch 4, wobei der zusätzliche Druckbehälter, der das zweite Löschmittel enthält, ein äußerer Druckbehälter (13) ist, der außerhalb des Innenvolumens (3) des Gehäuses (2) platziert ist, wobei der zusätzliche Druckbehälter (13) mit dem Innenvolumen (3) des Gehäuses (2) über eine Strömungsröhre (16) verbunden ist.

9. Batteriesicherheitsanordnung nach Anspruch 5, wenn er von Anspruch 2 oder Anspruch 3 abhängt, wobei der oder jeder innere Druckbehälter (5), der das erste Löschmittel enthält, fluidmäßig mit dem äußeren Druckbehälter (13) über einen Strömungskanal (12) verbunden ist.

10. Batteriesicherheitsanordnung nach Anspruch 6, wobei der oder jeder innere Druckbehälter (5) so eingerichtet ist, dass er einen Strom des ersten Löschmittels entlang dem Strömungskanal (12) bei einer Erhöhung der Innentemperatur über den Temperatur-Schwellenwert freisetzt, wobei der Strom des ersten Löschmittels so wirkt, dass der Druck im äußeren Druckbehälter (13) erhöht wird.

11. Batteriesicherheitsanordnung nach Anspruch 7, wobei der zusätzliche Druckbehälter (13) anfangs mit einer Verschlussanordnung (15) verschlossen ist, die so eingerichtet ist, dass sie sich bei einer Erhöhung seines Innendrucks über einen Druck-Schwellenwert öffnet.

12. Batteriesicherheitsanordnung nach Anspruch 8, wobei das Öffnen des Verschlusselements (15) bewirkt, dass ein gemischter Strom aus beiden Löschmitteln aus dem zusätzlichen Druckbehälter (13) in das Innenvolumen (3) des Gehäuses (2) strömt.

13. Batteriesicherheitsanordnung nach Anspruch 11 oder Anspruch 12, wobei die Verschlussanordnung ein Verschlusselement (15) umfasst, das anfangs eine Austrittsöffnung (14) des zusätzlichen Druckbehälters (13) abdichtet, wobei das Verschlusselement (15) so eingerichtet ist, dass es bei der Erhöhung des Innendrucks des zusätzlichen Druckbehälters (13) über den Schwellenwert reißt.

14. Batteriesicherheitsanordnung nach einem der Ansprüche 7 bis 13, wobei das zweite Löschmittel einen Halon-Ersatz enthält.

15. Batteriesicherheitsanordnung nach einem vorhergehenden Anspruch, wobei der oder jeder innere Druckbehälter (5) so eingerichtet ist, dass er eine ähnliche Größe und Form wie die oder jede galvanische Zelle (4) aufweist.

## Revendications

1. Agencement de sécurité de batterie pour véhicule à moteur, l'agencement étant apte à éteindre un incendie de batterie et comprenant : une unité de batterie (1) présentant un boîtier (2) définissant un volume intérieur (3) contenant au moins une pile électrique (4) et un réservoir intérieur sous pression (5) séparé, le réservoir sous pression (5) étant exposé à la température intérieure du volume intérieur (3) et contenant un volume d'agent extincteur comprimé à une pression qui dépend de ladite température intérieure, le réservoir sous pression (5) étant initialement fermé par un agencement de fermeture (9) configuré pour s'ouvrir en réaction à une augmentation de ladite pression correspondant à une augmentation de ladite température intérieure au-dessus d'une valeur seuil de température pour libérer ainsi ledit agent extincteur dudit réservoir sous pression (5) afin qu'il s'écoule dans ledit volume intérieur (3) du boîtier (2).

2. Agencement de sécurité de batterie selon la revendication 1, dans lequel ledit agencement de fermeture comprend un élément de fermeture (9) fermant initialement de manière hermétique un orifice de sortie (8) du réservoir sous pression (5), l'élément de fermeture (9) étant configuré (10) pour rompre lors de ladite augmentation de pression.

3. Agencement de sécurité de batterie selon la revendication 1 ou la revendication 2, comprenant une pluralité de dits réservoirs intérieurs sous pression (5) situés à l'intérieur du volume intérieur (3) du boîtier (2).

4. Agencement de sécurité de batterie selon la revendication 3, dans lequel lesdits réservoirs intérieurs sous pression (5) sont espacés les uns des autres.

5. Agencement de sécurité de batterie selon une quelconque revendication précédente, dans lequel ledit agent extincteur comprend du dioxyde de carbone.

6. Agencement de sécurité de batterie selon une quelconque revendication précédente, dans lequel ledit agent extincteur comprend un produit de remplacement du Halon.

7. Agencement de sécurité de batterie selon une quelconque revendication précédente, dans lequel ledit agent extincteur représente un premier de deux agents extincteurs, le second de ceux-ci étant situé à l'intérieur d'un réservoir sous pression supplémentaire (13) initialement fermé agencé en communication fluidique avec le volume intérieur (3) du boîtier (2), le premier agent extincteur et le ou chaque dit réservoir intérieur sous pression (5) formant au moins une partie d'un système d'actionnement configuré de telle sorte que lors d'une augmentation de ladite température intérieure au-dessus d'une valeur seuil de température, la pression résultante du premier agent extincteur agit pour ouvrir le réservoir sous pression supplémentaire (13), libérant ainsi un écoulement dudit second agent extincteur vers le volume intérieur (3) du boîtier (2).

8. Agencement de sécurité de batterie selon la revendication 4, dans lequel ledit réservoir sous pression supplémentaire contenant le second agent extincteur est un réservoir extérieur sous pression (13) positionné à l'extérieur du volume intérieur (3) du boîtier (2), le réservoir sous pression supplémentaire (13) étant relié au volume intérieur (3) du boîtier (2) par un conduit d'écoulement (16).

9. Agencement de sécurité de batterie selon la revendication 5, lorsqu'elle dépend de la revendication 2 ou de la revendication 3, dans lequel le ou chaque dit réservoir intérieur sous pression (5) contenant le premier agent extincteur est relié par liaison fluidique au réservoir extérieur sous pression (13) par une voie d'écoulement (12).

10. Agencement de sécurité de batterie selon la revendication 6, dans lequel le ou chaque réservoir intérieur sous pression (5) est configuré pour libérer un écoulement dudit premier agent extincteur le long de ladite voie d'écoulement (12) lors d'une augmentation de ladite température intérieure au-dessus de ladite valeur seuil de température, ledit écoulement dudit premier agent extincteur agissant pour augmenter la pression à l'intérieur du réservoir extérieur sous pression (13).

11. Agencement de sécurité de batterie selon la revendication 7, dans lequel ledit réservoir sous pression supplémentaire (13) est initialement fermé par un agencement de fermeture (15) configuré pour s'ouvrir lors d'une augmentation de sa pression intérieure au-dessus d'une valeur seuil de pression.

12. Agencement de sécurité de batterie selon la revendication 8, dans lequel l'ouverture dudit élément de fermeture (15) est efficace pour permettre un écoulement mélangé des deux dits agents extincteurs dudit réservoir sous pression supplémentaire (13) au volume intérieur (3) du boîtier (2).

13. Agencement de sécurité de batterie selon la revendication 11 ou la revendication 12, dans lequel ledit agencement de fermeture comprend un élément de fermeture (15) fermant initialement de manière hermétique un orifice de sortie (14) du réservoir sous pression supplémentaire (13), l'élément de fermeture (15) étant configuré pour rompre lors de ladite augmentation de la pression intérieure du réservoir sous pression supplémentaire (13) au-dessus de la valeur seuil.

14. Agencement de sécurité de batterie selon l'une quelconque des revendications 7 à 13, dans lequel ledit second agent extincteur comprend un produit de remplacement du Halon.

15. Agencement de sécurité de batterie selon une quelconque revendication précédente, dans lequel la ou chaque dit réservoir intérieur sous pression (5) est configurée pour présenter une taille et une forme similaires à la ou chaque pile électrique (4).
